# EUROPEAN PATENT APPLICATION

(11) **EP 4 840 319 A1**
(43) Date of publication of application: **18.11.2026**
(21) Application number: 24917044.0
(22) Date of filing: 16.12.2024
(51) Int. Cl.: A23G 1/50, A23G 1/56, A23L 2/39

(54) **POWDERY CHOCOLATE COMPOSITION**

(30) Priority: 12.01.2024 JP 2024002904
(71) Applicant: Fuji Oil Co., Ltd., Izumisano-shi, Osaka 598-8540 (JP)
(72) Inventor: MIZUSHIMA, Shigeki, Tsukubamirai-shi, Ibaraki 300-2436 (JP)
(74) Representative: Becker, Eberhard
(86) International application number: PCT/JP2024/044470
(87) International publication number: WO 2025/150360

(57) **Abstract**

The present invention addresses the problem of obtaining a powdery chocolate composition serving as a chocolate seed agent that is exceptional in dispersibility when added to chocolate, suppresses softening of chocolate, and improves persistence of flavor physical properties of chocolate, the powdery chocolate composition being exceptional in dispersibility as a chocolate powder beverage and in flavor as a chocolate beverage. A powdery chocolate composition satisfying the aforementioned problem is obtained by drying an oil-in-water emulsion obtained by dispersing a raw material satisfying all of the following conditions (A) to (D) in water, the oil-in-water emulsion having an average emulsified particle diameter of 1.5-10 µm. (A) Contains 110 mass% or less of an oil and fat with respect to the non-fat cacao solid content. (B) Contains 30 mass% or more of a cacao-derived raw material with respect to the solid content of the composition. (C) Contains 15 mass% or more of an oil and fat with respect to the solid content of the composition. (D) A milk-derived raw material constitutes 0.5 mass% or less with respect to the solid content of the composition.

## Description

### Technical Field

The present invention relates to a powdery chocolate composition.

### Background Art

In a general chocolate production process, when a molten chocolate mix after being subjected to conching is solidified and molded, tempering is performed for improving the releasability from a mold after solidification and improving various properties of the chocolate, such as gloss, luster, and snap, and for inhibiting the occurrence of fat bloom. Tempering is an operation of controlling the temperature of the chocolate mix to form three-chain length β-form oil and/or fat crystal nuclei of symmetric triglycerides.

Unfortunately, the tempering operation of once lowering the temperature of the chocolate mix to form oil and/or fat crystal nuclei and heating the chocolate mix again to make the formed oil and/or fat crystal nuclei into a stable form is complicated, and there are many restrictions because strict temperature control is required. Therefore, as an alternative to tempering, a seeding method is known in which a crushed product of chocolate, cocoa butter, or cocoa butter-like fat is added as a seed agent to a molten chocolate mix.

As the seed agent, a powdery seed agent (for example, Patent Documents 1 and 2) and a seed agent containing oil and/or fat crystal nuclei dispersed in a liquid oil (for example, Patent Documents 3 and 4) are known. The former powdery seed agent has poor oil compatibility because oil and/or fat crystals as a hydrophobic material and a hydrophilic material such as carbohydrates are present separately, and needs to be sufficiently stirred for uniform dispersion in chocolate. If the seed agent is insufficiently dispersed, fat bloom is likely to occur, and lumps remain, resulting in poor appearance. In addition, it is necessary to blend the seed agent in a relatively large amount, for example, from 1 to 3 mass% with respect to chocolate, and thus there is such a problem that the flavor of the chocolate is impaired.

The latter seed agent containing oil and/or fat crystal nuclei dispersed in a liquid oil, which is intended to facilitate dispersion in chocolate having high viscosity, has drawbacks: the dispersion of the oil and/or fat crystal nuclei becomes uneven with time, and the oil and/or fat crystal nuclei are united to become coarse. Patent Document 5 remedies this problem by blending other oils and/or fats. The technique, however, has a problem that the chocolate is softened and the snap is impaired because the chocolate contains a large amount of oils and/or fats that are liquid at normal temperature.

Patent Document 6 discloses chocolate containing stable crystals of StOSt (1,3-distearoyl-2-oleoylglycerol) dispersed in an emulsifier. The technique has such a problem that the viscosity of the chocolate is reduced and the workability is impaired. In addition, the flavor derived from the emulsifier is unpleasant.

Patent Document 7 proposes a method of using a cocoa powder as a seed agent. The technique, however, requires blending of the cocoa powder in a large amount of 2 mass% or more, and has such a problem that the powderiness and roughness are increased, and the quality of the chocolate is impaired.

Meanwhile, hot chocolate can be mentioned as food and/or beverage for enjoying the flavor of chocolate. Hot chocolate is produced by removing cocoa butter from cocoa mass, and therefore, chocolate-like thick texture and a flavor derived from fat-soluble aroma components are reduced. As a method for remedying such reduction, there is a method of powdering chocolate containing a large amount of cocoa butter. However, the chocolate powder is a powder containing a high concentration of oil and/or fat (cocoa butter). Therefore, when an attempt is made to dissolve the chocolate powder in water, there is a disadvantage that the chocolate powder is poorly wetted with water and not easily dispersed or dissolved, and a part of the chocolate powder remains undissolved, and thus the powder remains floating on the water surface or conversely settles to form a precipitate, and is not uniformly dissolved in the liquid.

In the related art, various proposals have been made for beverages containing chocolate. In each of Patent Documents 8 and 9, a chocolate beverage that is an oil-in-water emulsion is prepared using a low molecular weight emulsifier such as organic acid monoglyceride and a milk raw material of milk powder sugar. These methods, however, have such a problem that the original flavor of sweet chocolate is impaired because the chocolate beverage contains the milk-derived raw material and the emulsifier in large amounts. Further, Patent Document 8 discloses chocolate of oil-in-water type imitating a ganache. Since the chocolate has too high an oil content, the chocolate is too thick and unsuitable for a beverage.

Patent Document 9 discloses powdery chocolate derived from an oil-in-water emulsion similar to that of the present invention. The chocolate contains a milk component, and the upper limit of the emulsion particle size is as large as 30 µm, and there is also such a description that the chocolate does not have a crystal peak.

### Citation List

### Patent Document

Patent Document 1: JP S63-240745 A
Patent Document 2: JP H01-060330 A
Patent Document 3: JP H02-000406 A
Patent Document 4: JP H02-242639 A
Patent Document 5: WO 2012/043548
Patent Document 6: JP 2016-149971 A
Patent Document 7: JP 2006-115720 A
Patent Document 8: JP S61-052256 A
Patent Document 9: WO 2017/082364

### Summary of Invention

### Technical Problem

An object of the present invention is to provide a powdery chocolate composition that has a good flavor and is easily dispersed in water to form an oil-in-water emulsion. Another object of the present invention is to provide a chocolate seed agent that is excellent in dispersibility when added to chocolate, inhibits softening of chocolate, and improves sustainability of flavor properties of chocolate. Still another object of the present invention is to provide a food that is excellent in dispersibility as a chocolate powder beverage as well as in flavor as a chocolate beverage.

### Solution to Problem

As a result of intensive studies on the above problems, the present inventor has found that the above problems can be solved by using a powdery chocolate composition that is produced by adjusting the contents of non-fat cocoa, cocoa-derived raw material, and oil and/or fat to produce an oil-in-water emulsion having an average emulsion particle size of 1.5 µm or more and 10 µm or less, and further drying the oil-in-water emulsion. Thus, the present inventor has completed the present invention.

That is, the present invention relates to the following aspects.
(1) A method for producing a powdery chocolate composition, the method including drying an oil-in-water emulsion having an average emulsion particle size of 1.5 µm or more and 10 µm or less, the oil-in-water emulsion being produced by dispersing, in water, a raw material satisfying all of conditions (A) to (D) presented below:
   (A) the raw material contains 110 mass% or less of oil and/or fat with respect to non-fat cocoa solids;
   (B) the raw material contains 30 mass% or more of cocoa-derived raw material solids with respect to solids of the powdery chocolate composition;
   (C) the raw material contains 15 mass% or more of oil and/or fat with respect to the solids of the powdery chocolate composition; and
   (D) the raw material is free of a milk-derived raw material.
(2) The method for producing a powdery chocolate composition according to (1), wherein from 30 to 75 mass% of cocoa mass, from 3 to 30 mass% of cocoa, and from 15 to 60 mass% of a saccharide are used as the raw material.
(3) The method for producing a powdery chocolate composition according to (2), wherein the cocoa mass and/or the cocoa is subjected to alkali treatment.
(4) The method for producing a powdery chocolate composition according to (1), wherein a method for the drying is spray drying.
(5) The method for producing a powdery chocolate composition according to (4), wherein from 30 to 75 mass% of cocoa mass, from 3 to 30 mass% of cocoa, and from 15 to 60 mass% of a saccharide are used as the raw material.
(6) The method for producing a powdery chocolate composition according to (5), wherein the cocoa mass and/or the cocoa is subjected to alkali treatment.
(7) A powdery chocolate composition satisfying all of conditions (A) to (E) presented below:
   (A) the powdery chocolate composition contains 110 mass% or less of oil and/or fat with respect to non-fat cocoa solids;
   (B) the powdery chocolate composition contains 30 mass% or more of cocoa-derived raw material solids with respect to solids of the powdery chocolate composition;
   (C) the powdery chocolate composition contains 15 mass% or more of oil and/or fat with respect to the solids of the powdery chocolate composition;
   (D) the powdery chocolate composition contains 0.5 mass% or less of a milk-derived raw material with respect to the solids of the powdery chocolate composition; and
   (E) the powdery chocolate composition, when dispersed in water, has an average emulsion particle size of 1.5 µm or more and 10 µm or less.
(8) The powdery chocolate composition according to (7), containing 8 mass% or more and 35 mass% or less of an SUS triglyceride with respect to the solids of the powdery chocolate composition, where
   S is a saturated fatty acid having from 16 to 18 carbon atoms, U is a monounsaturated fatty acid having from 16 to 18 carbon atoms, and SUS is a triglyceride in which S is bonded to 1- and 3-positions of the triglyceride and U is bonded to 2-position of the triglyceride.
(9) A chocolate seed agent containing the powdery chocolate composition described in (7).
(10) A chocolate powder beverage containing the powdery chocolate composition described in (7).
(11) A chocolate beverage containing the powdery chocolate composition described in (7) dispersed in water or warm water.
(12) A chocolate seed agent containing the powdery chocolate composition described in (8).
(13) A chocolate powder beverage containing the powdery chocolate composition described in (8).
(14) A chocolate beverage containing the powdery chocolate composition described in (8) dispersed in water or warm water.

The present invention also relates to the following aspects.
(1) A powdery chocolate composition satisfying all of conditions (A) to (E) presented below:
   (A) the powdery chocolate composition contains 110 mass% or less of oil and/or fat with respect to non-fat cocoa solids;
   (B) the powdery chocolate composition contains 30 mass% or more of cocoa-derived raw material solids with respect to solids of the powdery chocolate composition;
   (C) the powdery chocolate composition contains 15 mass% or more of oil and/or fat with respect to the solids of the powdery chocolate composition;
   (D) the powdery chocolate composition contains 0.5 mass% or less of a milk-derived raw material with respect to the solids of the powdery chocolate composition; and
   (E) the powdery chocolate composition, when dispersed in water, has an average emulsion particle size of 1.5 µm or more and 10 µm or less.
(2) The powdery chocolate composition according to (1), containing 8 mass% or more and 35 mass% or less of an SUS triglyceride with respect to the solids of the powdery chocolate composition, where
   S is a saturated fatty acid having from 16 to 18 carbon atoms, U is a monounsaturated fatty acid having from 16 to 18 carbon atoms, and SUS is a triglyceride in which S is bonded to 1- and 3-positions of the triglyceride and U is bonded to 2-position of the triglyceride.
(3) A method for producing a powdery chocolate composition, the method including drying an oil-in-water emulsion having an average emulsion particle size of 1.5 µm or more and 10 µm or less, the oil-in-water emulsion being produced by dispersing, in water, a raw material satisfying all of conditions (A) to (D) presented below:
   (A) the raw material contains 110 mass% or less of oil and/or fat with respect to non-fat cocoa solids;
   (B) the raw material contains 30 mass% or more of cocoa-derived raw material solids with respect to solids of the powdery chocolate composition;
   (C) the raw material contains 15 mass% or more of oil and/or fat with respect to the solids of the powdery chocolate composition; and
   (D) the raw material is free of a milk-derived raw material.
(4) The method for producing a powdery chocolate composition according to (3), wherein a method for the drying is spray drying.
(5) The method for producing a powdery chocolate composition according to (3) or (4), wherein from 30 to 75 mass% of cocoa mass, from 3 to 30 mass% of cocoa, and from 15 to 60 mass% of a saccharide are used as the raw material.
(6) The method for producing a powdery chocolate composition according to (5), wherein the cocoa mass and/or the cocoa is subjected to alkali treatment.
(7) A chocolate seed agent containing the powdery chocolate composition described in (1).
(8) A chocolate powder beverage containing the powdery chocolate composition described in (1).
(9) A chocolate beverage containing the powdery chocolate composition described in (1) dispersed in water or warm water.

### Advantageous Effects of Invention

According to the present invention, a powdery chocolate composition that has a good flavor and is easily dispersed in water to form an oil-in-water emulsion can be provided. Use of the present chocolate composition provides a chocolate seed agent that can be easily and uniformly dispersed when added to chocolate, has good workability, inhibits softening of chocolate, and improves sustainability of the flavor of chocolate. Further, use of the present chocolate composition in a chocolate beverage provides a food having good dispersibility and an excellent chocolate flavor.

### Description of Embodiments

### Cocoa-Derived Raw Material

In the present invention, the term "cocoa-derived raw material" means cocoa mass, cocoa, and cocoa butter, and the term "non-fat cocoa solids" means components that are contained in the cocoa-derived raw material and that are other than oil and/or fat. The percentage of the cocoa-derived raw material solids in the solids of the powdery chocolate composition of the present invention is 30 mass% or more, preferably 75 mass% or less, more preferably 35 mass% or more and 70 mass% or less, and most preferably 40 mass% or more and 60 mass% or less. When the percentage of the cocoa-derived raw material is in an appropriate range, high emulsifiability, dispersibility, and seed function as well as the flavor can be maintained.

### Alkali Treatment

Common natural cocoa or cocoa mass has a pH of about 5.3, and there are also so-called alkali-treated cocoa and cocoa mass whose pH is adjusted with an alkali. In the present invention, it is preferable to use cocoa mass and/or cocoa that has been subjected to alkali treatment, and the cocoa mass and/or cocoa preferably has a pH of 6 or more and 9 or less. Compared to the case where the cocoa mass and/or the cocoa has not been subjected to alkali treatment or has too high a pH, the powdery chocolate composition is excellent in emulsifiability, seed function, and dispersibility, and in addition, deterioration of the flavor (alkali odor) and the color tone (black color) can be inhibited.

### Oil and/or Fat

The oil and/or fat in the present invention essentially includes cocoa butter contained in the cocoa-derived raw material. Not only cocoa butter separated from cacao but also oil and/or fat remaining in cocoa mass and cocoa is included as cocoa butter in the amount of oil and/or fat described below. Cocoa butter is rich in SUS triglycerides that are responsible for the seed function. Here, S represents a saturated fatty acid having from 16 to 18 carbon atoms, U represents a monounsaturated fatty acid having from 16 to 18 carbon atoms, and SUS represents a triglyceride in which S is bonded to 1- and 3-positions of the triglyceride and U is bonded to 2-position of the triglyceride.

Other oils and/or fats may be added to cocoa butter. Examples of such other oils and/or fats include triglycerides such as soybean oil, rapeseed oil, corn oil, safflower oil, rice oil, cottonseed oil, sunflower oil, sesame oil, olive oil, peanut oil, palm oil, palm kernel oil, coconut oil, lard, beef tallow, fish oil, and medium-chain fatty acid oil; products produced by modifying these triglycerides by interesterification, hydrogenation, or the like; and fatty acids produced by decomposing these triglycerides. In the present invention, a so-called cocoa alternative having a melting point close to that of cocoa butter is preferable, and oil and/or fat containing the above-described SUS triglycerides is particularly preferable.

It is necessary that the oil and/or fat, that is, cocoa butter alone or a combination of cocoa butter with other oils and/or fats is contained in an amount of 15 mass% or more, and preferably 20 mass% or more in the solids of the powdery chocolate composition. The amount of oil and/or fat is preferably 45 mass% or less, or 35 mass% or less. The amount of oil and/or fat is more preferably 30 mass% or less, and most preferably from 21 to 25 mass%. When the amount of oil and/or fat is 15 mass% or more, the powdery chocolate composition has a good flavor, a good seed function, and the like. When the amount of oil and/or fat is 45 mass% or less, water dispersibility, powder flowability, storage stability, and the like can be improved.

The powdery chocolate composition of the present invention preferably contains a specific amount of SUS triglycerides. Specifically, the amount of SUS triglycerides in the solids of the powdery chocolate composition is preferably 8 mass% or more, 10 mass% or more, or 15 mass% or more, and preferably 35 mass% or less, 30 mass% or less, or 25 mass% or less. The amount of SUS triglycerides is more preferably 15 mass% or more and 30 mass% or less, and most preferably 17 mass% or more and 20 mass% or less. When the amount of SUS triglycerides with respect to the amount of oil and/or fat is 8 to 35 mass%, an excellent seed function can be exhibited. In addition, when the amount of cocoa butter with respect to the amount of oil and/or fat is sufficient, the flavor can be improved.

### Non-Fat Cocoa Solids and Oil and/or Fat

The term "non-fat cocoa solids" refers to a portion of the cocoa-derived raw material excluding cocoa butter and water, such as cocoa mass and cocoa. Since the non-fat cocoa has a great influence on the emulsifiability, the amount of oil and/or fat with respect to the non-fat cocoa solids is important. The percentage of the oil and/or fat contained with respect to the non-fat cocoa solids is required to be 110 mass% or less. The percentage is preferably 40 mass% or more or 60 mass% or more. The percentage is more preferably 70 mass% or more and 105 mass% or less, and most preferably 75 mass% or more and 100 mass% or less. When the amount of oil and/or fat is 110 mass% or less, emulsification is stable, and when the amount of oil and/or fat is 40 mass% or more, the powdery chocolate composition has a particularly good flavor and a particularly good seeding ability.

### Saccharides

In the present invention, saccharides may be blended for the purpose of serving as an excipient and a sweetener. Examples of the saccharides include monosaccharides such as glucose, fructose, galactose, and mannose; disaccharides such as sucrose, maltose, and trehalose; oligosaccharides such as fructo-oligosaccharide, galacto-oligosaccharide (4'-galactosyllactose), xylo-oligosaccharide, beet oligosaccharide (raffinose), and soybean oligosaccharide (raffinose and stachyose); dextrins such as dextrin, indigestible dextrin, isomaltodextrin (branched maltodextrin), cyclodextrin, and high molecular weight dextrin; mannans such as galactomannan, glucomannan, and konjac mannan; inulins such as inulin, inulin degradation products, and agave inulin; and other polysaccharides including polysaccharides having functions such as gelling properties, thickening properties, and dispersion stability, such as pectin, pullulan, guar gum, guar gum degradation products, xanthan gum, gum arabic, gum ghatti, native gellan gum, deacylated gellan gum, locust bean gum, tara gum, curdlan, carrageenan, karaya gum, tamarind seed gum, tragacanth gum, fenugreek gum, psyllium seed gum, succinoglycan, alginic acid, sodium alginate, propylene glycol alginate esters, soybean polysaccharides, methylcellulose, carboxymethyl cellulose, hydroxypropyl cellulose, hydroxypropyl methylcellulose, agar, fucoidan, porphyran, laminaran, starch, resistant starch, isomaltulose, polydextrose, indigestible glucan, and arabinogalactan.

Among them, glucose, sucrose, dextrin, and indigestible dextrin are preferable from the viewpoint of water dispersibility and workability during drying.

The content of the saccharides is preferably 30 mass% or more, more preferably 35 mass% or more, and still more preferably 40 mass% or more in the solids of the powdery chocolate composition from the viewpoint of sufficiently enhancing the emulsifiability. The upper limit of the content of the saccharides is preferably 70 mass% or less, more preferably 65 mass% or less, and still more preferably 55 mass% or less.

### Milk-Derived Raw Material

The present invention is characterized in that the content of the milk-derived raw material in the raw material is limited. Specifically, the content of the milk-derived raw material is 0.5 mass% or less with respect to the solids of the powdery chocolate composition, and preferably, no milk-derived raw material is used. The milk-derived raw material is prepared using animal milk, particularly cow's milk. Examples thereof include raw milk, skim milk, cream, milk whey, whole milk powder, skim milk powder, butter, casein, casein sodium, lactalbumin, lactose, and fermented products thereof. In the present invention, when the content of the milk-derived raw material is 0.5 mass% or less, emulsion particles having a size of 1.5 µm or more and 10 µm or less can be stably prepared.

### Emulsifier

In the present invention, it is preferable not to use an emulsifier other than lecithins described below. Here, the emulsifier is a substance having an emulsifying function, and includes a synthetic emulsifier and a natural emulsifier. Specific examples thereof include synthetic emulsifiers such as monoacylglycerol, diacylglycerol, organic acid monoglyceride, polyglycerin fatty acid ester, sucrose fatty acid ester, sodium stearoyl lactate, calcium stearoyl lactate, polyoxyethylene derivatives, fatty acid salts, and processed starch; and naturally occurring saponins such as soybean saponin and quillaja saponin. Substances having emulsifiability, such as proteins having an emulsifying function, for example, soybean protein, pea protein, milk casein, and lactalbumin are also included in the emulsifier. It is to be noted that those derived from milk, such as milk casein, are also included in the above-described milk raw material.

The lecithins are specifically naturally occurring lecithins such as lecithin, enzymatically decomposed lecithin, hydrogenated enzymatically decomposed lecithin, hydroxylecithin, phosphatidylglycerol, phosphatidic acid, and acetylated lecithin, and lecithin derivatives produced by chemically or enzymatically treating these lecithins. When the lecithins are used, the content thereof in the powdery chocolate composition is preferably 0.15 mass% or less, and more preferably 0.01 mass% or less. It is most preferable not to use any emulsifier including lecithins.

### Other Components

Various substances can be added without affecting the present invention, and they are exemplified below.

Examples of the substances include nutritional components (such as amino acids, vitamins, and minerals), alcoholic beverages, salts, taste components (including salty taste and umami taste), fruit juice (including concentrate), fruit flesh, vegetables, vegetable juice (including concentrate), purees, extracts, sweeteners (such as sugar alcohols such as erythritol, sorbitol, xylitol, maltitol, lactitol, reduced isomaltulose, and mannitol), high-intensity sweeteners (such as sucralose, acesulfame K, aspartame, neotame, saccharin, sodium saccharin, thaumatin, stevia, glycyrrhizin, monellin, alitame, and disodium glycyrrhizinate), bittering agents (such as iso-α-acid, Rho-hop, Hexahop, and Tetrahop), acidulants, colorants (such as safflower yellow, caramel color, gardenia color, fruit juice colorants, vegetable colorants, and synthetic colorants), food additives (such as dietary fibers, excipients, pH adjusters, preservatives, antioxidants (such as vitamin C, vitamin E, and extracted tocopherols), thickeners, stabilizers, and gelling agents), and active ingredients and additives of pharmaceuticals, quasi-drugs, and cosmetics.

### Typical Formulation

An example of a typical composition that can meet the above requirements is a powdery chocolate composition containing from 30 to 75 mass%, preferably from 33 to 65 mass%, and more preferably from 36 to 45 mass% of cocoa mass, from 3 to 30 mass%, preferably from 6 to 15 mass%, and more preferably from 7 to 12 mass% of cocoa, and from 15 to 60 mass%, preferably from 25 to 55 mass%, and more preferably from 35 to 55 mass% of saccharides. Other substances that do not affect the physical properties may also coexist. Using these raw materials, a powdery chocolate composition can be prepared by the following preparation method.

Cocoa mass can be replaced by cocoa butter and cocoa. That is, 1 part by mass of cocoa and 1 part by mass of cocoa butter are regarded as 2 parts by mass of cocoa mass.

### Preparation Method

An example of a preparation method will be described in the following. The cocoa-derived raw material and other raw materials are prepared on the basis of the above-described composition. First, saccharides are dissolved in water to prepare an aqueous phase. The amount of water is preferably from 3 to 10 mass times, and more preferably from 4 to 6 mass times the amount of the non-fat cocoa solids. If the amount of the aqueous phase is too small, a load of drying to be described later is reduced; however, the subsequent emulsification may not be performed well. When the amount of the aqueous phase is too large, the subsequent emulsification may not be performed well as described above, and the load of drying becomes excessive. The temperature of water to be used is not particularly limited, and warm water is preferable, and from 60 to 80°C is suitable. When the temperature is low, the viscosity may increase to deteriorate the workability, and when the temperature is high, an oil-soluble component to be blended may deteriorate.

As for the cocoa-derived raw material and oil and/or fat, if any oil-soluble substance is required, the substance is added to the oil and/or fat, and then the resultant mixture is used as an oil phase. Depending on the fatty acid or the like constituting also the oil phase, warming is preferred, and, in many cases, preparation is carried out at a temperature not lower than a melting point thereof.

### Emulsification Apparatus

The aqueous phase and the oil phase are mixed. At this time, preliminary emulsification is preferably performed. The preliminary emulsification is to prepare an oil-in-water emulsion having an average emulsion particle size of from about 10 µm to about 100 µm by treatment with a homomixer or the like. Although the rotation speed varies depending on the device, for example, in the case of HOMOGENIZING MIXER MARK II Model 2.5 available from PRIMIX Corporation, the treatment may be carried out at 8000 rpm for about 10 minutes.

Subsequently, main emulsification is performed. Although the emulsification is not particularly limited, an emulsification apparatus having a high shear force is preferable, and examples thereof include a homomixer, a colloid mill, a high-pressure homogenizer, an ultrahigh-pressure homogenizer, and a vacuum emulsifier. Specifically, an APV Gaulin homogenizer (available from APV), a microfluidizer (available from Microfluidex International Corp.), an ultimizer (available from Sugino Machine Limited), a nanomizer (available from NANOMIZER Inc.) or the like can be preferably used.

It is preferable to perform emulsification at a pressure of 1 MPa or more and 30 MPa or less using the high-pressure emulsification apparatus. In the case of a high-pressure homogenizer, it is effective to perform shearing treatment preferably at a pressure of 5 MPa or more and 20 MPa or less, and more preferably at a pressure of 5 MPa or more and 15 MPa or less. In addition, the shearing treatment may be performed a plurality of times. If the emulsification pressure is too low, the emulsion particle size cannot be reduced, and if the emulsification pressure is too high, the emulsion particle size is reduced too much, and the seed function is reduced.

An oil-in-water emulsion is prepared by the emulsification treatment. An emulsion having an average emulsion particle size of 1.5 µm or more and 10 µm or less can be used in the present invention.

### Sterilization

The oil-in-water emulsion prepared above can be sterilized to reduce microorganisms. The sterilization can be performed by selecting an appropriate one from various methods known for sterilizing food and/or beverage. Examples of the known sterilization methods include retort sterilization, low-temperature long-time (LTLT) sterilization, high-temperature short-time (HTST) sterilization, ultra-high-temperature (UHT) sterilization, steam infusion, steam injection, and Joule sterilization.

The sterilization temperature is generally 64°C or higher and lower than 130°C, but from the viewpoint of flavor, the lower limit of the sterilization temperature is preferably 70°C or higher, and particularly preferably 80°C or higher. Meanwhile, the upper limit of the sterilization temperature is preferably 120°C or lower, and particularly preferably 110°C or lower.

### Drying

The oil-in-water emulsion prepared above is dried to provide the powdery chocolate composition of the present application. As a method for drying and powdering the oil-in-water emulsion, a generally known spray drying method, vacuum freeze drying method, vacuum drying method, or the like can be used. Among these, spray-dried powdered oil and/or fat produced by a spray drying method is preferable. In the case of spray drying, a disk-type atomizer method, spray drying by a one-fluid or two-fluid nozzle, or the like can be used. Examples of the drying conditions include a hot air temperature of from 100 to 200°C and a discharge air temperature of from 50 to 100°C.

The upper limit of the hot air temperature is preferably 200°C or lower, and more preferably 150°C or lower. If the temperature is too high, the carbohydrates may undergo a caramelization reaction or the like due to overheating, or the spraying device may be scorched. Meanwhile, if the temperature is too low, the drying operation itself becomes difficult.

The upper limit of the discharge air temperature is preferably 85°C or lower, and more preferably 75°C or lower. The lower limit of the discharge air temperature is preferably 50°C or higher, and more preferably 60°C or higher. If the temperature is too high, the carbohydrates may undergo a caramelization reaction or the like due to overheating, and not only an off-flavor is generated but also powdering is inhibited due to glass transition of the carbohydrates. If the temperature is too low, the drying operation itself becomes difficult.

The powdery chocolate composition can be produced by drying the above-described oil-in-water emulsion under such conditions.

### Powdery Chocolate Composition

Specifically, the powdery chocolate composition of the present invention satisfies all of conditions (A) to (E) presented below. (A) The powdery chocolate composition contains 110 mass% or less of oil and/or fat with respect to non-fat cocoa solids. (B) The powdery chocolate composition contains 30 mass% or more of cocoa-derived raw material solids with respect to solids of the powdery chocolate composition. (C) The powdery chocolate composition contains 15 mass% or more of oil and/or fat with respect to the solids of the powdery chocolate composition. (D) The powdery chocolate composition contains 0.5 mass% or less of a milk-derived raw material with respect to the solids of the powdery chocolate composition. (E) The powdery chocolate composition, when dispersed in water, has an average emulsion particle size of 1.5 µm or more and 10 µm or less.

The present powdery chocolate composition is a powder preferably containing 15 mass% or less, more preferably 10 mass% or less, and most preferably 5 mass% or less of water, and preferably having an average particle size of 10 µm or more and 1000 µm or less, more preferably 15 µm or more and 500 µm or less, and most preferably 20 µm or more and 60 µm or less.

The powdery chocolate composition may be granulated to produce a granulated product having a particle size of from about 0.5 mm to about 5 mm. The granulated product is suitable for beverage applications. In this case, the granulated product is also regarded as a powder in a broad sense.

### Emulsion Particle Size

The powdery chocolate composition of the present invention is dispersed in water or warm water to easily produce an oil-in-water emulsion. The emulsion has an average emulsion particle size of 1.5 µm or more and 10 µm or less. The average emulsion particle size is preferably 2 µm or more and 5 µm or less. When the average emulsion particle size is in the range of 1.5 µm or more and 10 µm or less, the powdery chocolate composition may have a sufficient seed function and water dispersibility.

When common chocolate is powdered, the chocolate is hardly dispersed in water or warm water. When the temperature is increased and a shear force is applied, the chocolate is dispersed, but there is such a problem that oil and/or fat is separated. The powdery chocolate composition of the present invention contains the oil and/or fat in the form of particles having a size of 1.5 µm or more and 10 µm or less. Therefore, unlike the known powdery chocolate compositions, the powdery chocolate composition of the present invention can be dispersed while maintaining an emulsified state.

### Chocolate Seed Agent

In the present invention, the term "chocolate seed agent" refers to an additive for chocolate having an effect of promoting tempering in a tempering operation of a chocolate mix. Specifically, the chocolate seed agent contains, as an active ingredient, oil and/or fat crystals having a structure that induces, as for cocoa butter and an alternative thereof in a chocolate mix, form V crystal growth of cocoa butter.

The chocolate seed agent of the present invention is the above-described powdery chocolate composition, or contains the above-described powdery chocolate composition. The powdery chocolate composition of the present invention not only contains oil and/or fat crystals, but also has hydrophilicity. Therefore, the powdery chocolate composition can be easily dispersed in chocolate uniformly as compared with the case of directly using a powder of oil and/or fat crystals, and the amount used can be reduced. As a result, the powdery chocolate composition is effective in terms of both economy and flavor.

### Chocolate Beverage

The chocolate beverage of the present invention is a product containing the above-described powdery chocolate composition dispersed in water or warm water. In addition, the present chocolate beverage is an oil-in-water emulsion that contains cacao components dispersed in water and that has high cocoa solids, a high oil content, and a sweetener. Specifically, the beverage has cocoa solids of from 2 mass% to 20 mass%, and preferably from 5 mass% to 10 mass%, and an oil content of from 1 mass% to 10 mass%, and preferably from 2 mass% to 6 mass%. In addition, the dispersion state of O/W is maintained even at a temperature equal to or lower than the melting point of the contained oil and/or fat. Thus, the chocolate beverage has such characteristics that it has a rich chocolate feeling and has no off-flavor, the aqueous phase of the O/W has no residual feeling in the mouth, and the chocolate beverage has a cacao flavor and a thick taste as compared with known chocolate beverages. Preferably, the solids of the chocolate beverage contain the powdery chocolate composition as a main component, and more preferably, the solids of the chocolate beverage consist only of the powdery chocolate composition.

### Chocolate Powder Beverage

The chocolate powder beverage of the present invention is a powder that can be dispersed in water or warm water to prepare the above-described chocolate beverage. The chocolate powder beverage is the above-described powdery chocolate composition, or a product produced by mixing the powdery chocolate composition with a different hydrophilic substance. As the different substance to be mixed, those that do not affect the dispersibility of the chocolate powder beverage can be used. Examples thereof include sweeteners including monosaccharides such as fructose, glucose, and galactose, disaccharides such as sugar, maltose, and starch syrup, oligosaccharides such as soybean oligosaccharide and fructo-oligosaccharide, sugar alcohols such as xylitol and reduced maltose, aspartame, stevia, and sucralose; and excipients including saccharides such as dextrin and starch, proteins from soybeans, peas, mung beans and the like, and fibers such as soybean polysaccharides and citrus fiber sugar.

The powdery chocolate composition of the present invention is evaluated by the following procedures.

### Water Content

The water content is determined by loss on drying under normal pressure (105°C, 12 hours).

### Average Emulsion Particle Size

The average emulsion particle size is determined by mixing 1 g of a sample of the powdery chocolate composition with 19 g of water, redissolving the sample with a touch mixer, centrifuging the resulting mixture at 500 G for 2 minutes to precipitate non-fat cocoa solids, and measuring the average emulsion particle size of the mixture in the upper layer using a laser diffraction type particle size analyzer "SALD-2300" available from Shimadzu Corporation in water as a solvent. The median diameter D50 is taken as the average emulsion particle size.

### Average Powder Particle Size

The average powder particle size is determined by mixing 0.1 g of a sample of the powdery chocolate composition with 10 mL of isopropanol, dispersing the sample with a touch mixer, and measuring the average powder particle size using a laser diffraction type particle size analyzer "SALD-2300" available from Shimadzu Corporation in the same solvent. The median diameter D50 is taken as the average particle size.

### Example

Hereinafter, the present invention will be described in more detail with reference to Examples, but the spirit of the present invention is not limited to these Examples at all. In Examples, "part" and "%" mean "part by mass" and "mass%", respectively.

### Raw Materials

The raw materials used in Examples and Comparative Examples are as described below. All products used as the cocoa mass and the cocoa powder contained 81 mass% of SUS triglycerides in the oil and/or fat.
1) Cocoa mass A: commercially available cocoa mass, pH = 5.3
2) Cocoa mass B: commercially available cocoa mass, pH = 7.4
3) Cocoa powder A, a commercially available cocoa powder, pH = 6.9
4) Cocoa powder B, a commercially available cocoa powder, pH = 5.4
5) Cocoa powder C, a commercially available cocoa powder, pH = 7.6
6) Cocoa powder D, a commercially available cocoa powder, pH = 8.2
7) Cocoa butter: commercially available cocoa butter
8) Cocoa butter alternative: Trade name "Melano NEW. SS-7" available from FUJI OIL CO., LTD., SUS triglycerides in the fat: 82 mass%
9) Rapeseed oil: Trade name "Refined rapeseed oil" available from FUJI OIL CO., LTD., SUS triglycerides in the oil and/or fat: 0 mass%
10) Sugar: Trade name "Sucrose" available from KISHIDA CHEMICAL CO., LTD.
11) Glucose: Trade name "D(+)-glucose" available from KISHIDA CHEMICAL CO., LTD.
12) Dextrin: Trade name "Pinedex #6" available from Matsutani Chemical Industry Co., Ltd., DE = 40
13) Indigestible dextrin: Trade name "Fibersol 2" available from Matsutani Chemical Industry Co., Ltd.
14) Lactose: Trade name "Lactose" available from Hilmar Cheese Company, Inc.
15) Whole milk powder: Trade name "Yotsuba Whole milk powder" available from Yotsuba Milk Products Co., Ltd.
16) Sodium caseinate: Trade name "Sodium caseinate" available from Fonterra
17) Hydrophilic emulsifier: polyglycerol-stearic acid ester, trade name "SY Glyster MSW-7S" available from Sakamoto Yakuhin Kogyo Co., Ltd., HLB = 13.4
18) Lecithin: Trade name "SLP-paste" available from Tsuji Oil Mills co., Ltd.

### Production and Evaluation of Powdery Chocolate Composition 1 - Examination of Blend Ratio

The raw materials of the aqueous phase were mixed according to the formulation in Table 1 to prepare an aqueous phase. The temperature of the aqueous phase was set to 60°C, and while the aqueous phase was stirred, the oil phase was added thereto. The resulting mixture was stirred to give a preliminary emulsion. For stirring, a homomixer (HOMOGENIZING MIXER MARK-II available from PRIMIX Corporation, 6000 rpm, 5 minutes) was used. The preliminary emulsion was subjected to 1-pass treatment at 10 MPa using a high-pressure homogenizer (APV 1000 available from SMT Co., Ltd.) to give an emulsion. The emulsion was subjected to spray drying to prepare a powdery chocolate composition having an average powder particle size of from 24 to 44 µm. Conditions for spray drying were a hot air temperature of 140°C and a discharge air temperature of 70°C. Here, the oil phase contains components derived from cacao as a raw material, oil and/or fat, and lecithin, and the aqueous phase contains components different from those of the oil phase, that is, water and other raw materials having affinity for water.

For the resulting powdery chocolate composition, whether the composition exhibits a seed function during chocolate production and whether the snap is reduced due to the seed agent were tested to examine the chocolate seed suitability. In addition, the dispersibility of the powder, the flavor as chocolate, and the flavor other than the chocolate flavor were tested to examine the chocolate beverage suitability. A powdery chocolate composition having both of the functions was judged to be acceptable.

### Evaluation of Seed Function

The seed function was evaluated as follows. In 100 parts of a chocolate mix, 0.2 parts of a powdery chocolate composition was mixed, and the components were stirred and then filled in a mold. The releasability (demoldability) after cooling to 10°C and the bloom of a sample held at 20°C for 7 days were evaluated. As the chocolate mix, sweet chocolate available from FUJI OIL CO., LTD. was used. The sweet chocolate was completely melted at 60°C and then adjusted to 32°C.

As a positive control, a sample was used that was prepared by cooling only the chocolate mix to 26°C, heating the chocolate mix to 31°C, then filling the chocolate mix in a mold, cooling the chocolate mix at 10°C for 30 minutes, and then holding the chocolate mix at 20°C for 7 days.

Score 4: The sample was demolded by cooling at 10°C for 15 minutes. The gloss was comparative to that of the positive control, and no bloom was observed.

Score 3: The sample was demolded by cooling at 10°C for 30 minutes. The gloss was comparative to that of the positive control, and no bloom was observed.

Score 2: The sample was demolded by cooling at 10°C for 30 minutes. Bloom was observed.

Score 1: The sample was not demolded by cooling at 10°C for 30 minutes. Bloom was observed.

A score of 3 or higher was determined to be acceptable.

### Evaluation of Snap

The snap is a feature of chocolate, and means a crispy texture felt when eating. The chocolate samples prepared in the evaluation of seed function were evaluated by six expert panelists.

As a positive control, a sample was used that was prepared by cooling only the chocolate mix to 26°C, heating the chocolate mix to 31°C, then filling the chocolate mix in a mold, cooling the chocolate mix at 10°C for 30 minutes, and then holding the chocolate mix at 20°C for 7 days.

As a negative control, a sample was used that was prepared by mixing 100 parts of a chocolate mix with 0.5 parts of a paste-like seed agent described below, filling the resulting mixture in a mold, cooling the mixture at 10°C for 30 minutes, and then holding the mixture at 20°C for 7 days.

Score 3: The snap is comparative to that of the positive control, and the sample has good snap.

Score 2: The snap is at the intermediate level between the positive control and the negative control, and the sample has somewhat good snap.

Score 1: The snap is comparative to that of the negative control, and the sample has poor snap.

A score of 2 or higher was determined to be acceptable.

The paste-like chocolate seed agent was prepared by the following procedure. A solid fat (Melano SS-400S available from FUJI OIL CO., LTD.) containing a large amount of StOSt (1,3-distearoyl-2-oleoylglycerol) was crystallized into a form V crystal, and the form V solid fat was refined with dry ice using a juicer mixer. The resulting mixture was air-dried and then passed through a 40-mesh sieve (opening: 0.405 mm) to give a form V crystal refined product having a particle size of from about 0.05 mm to about 0.2 mm. To 1 part by mass of the refined product, 9 parts by mass of high-oleic sunflower oil was mixed, and the resulting mixture was stirred with a homomixer to give a paste-like seed agent formed of an oil and/or fat crystal dispersion.

### Evaluation of Dispersibility

In a 300 mL beaker, 200 mL of purified water at 60°C was placed, 20 g of a powdery chocolate composition was gently put on the water surface with stirring at 500 rpm, and the time (seconds) until the sample was completely dispersed and dissolved was measured. A time of 20 seconds or less was determined to be acceptable.

### Evaluation of Flavor of Chocolate Beverage

In 80 parts of warm water at 60°C, 20 parts of a powdery chocolate composition was dispersed, and the flavor was evaluated by six expert panelists. As a positive control, a sample was used that was prepared by blending 10 parts of cocoa mass and 10 parts of sugar in 80 parts of warm water at 60°C, and mixing and dispersing the components with a juicer mixer.
- Sweet chocolate flavor (cacao flavor)
   Score 4: The cacao flavor is comparative to that of the positive control.
   Score 3: The cacao flavor is slightly inferior to that of the positive control.
   Score 2: The cacao flavor is somewhat inferior to that of the positive control.
   Score 1: The cacao flavor is significantly inferior to that of the positive control.
   A score of 3 or higher was determined to be acceptable.
- Off-flavor other than sweet chocolate flavor
   Score 3: No off-flavor is felt at all, and the flavor is comparable to that of the positive control.
   Score 2: A slight off-flavor is felt compared to the positive control.
   Score 1: A strong off-flavor is felt compared to the positive control.
   A score of 2 or higher was determined to be acceptable.

Samples that were acceptable in all of the average emulsion particle size, seed function, snap, dispersibility, sweet chocolate flavor, and off-flavor other than sweet chocolate flavor described above were rated as acceptable in the overall evaluation.

The results are shown in the lower part of Table 1. It was found that in Examples 1 to 5 satisfying all the requirements (A) to (E) of the present invention, i.e., (A) the powdery chocolate composition contains 110 mass% or less of oil and/or fat with respect to non-fat cocoa solids; (B) the powdery chocolate composition contains 30 mass% or more of a cocoa-derived raw material with respect to solids of the powdery chocolate composition; (C) the powdery chocolate composition contains 15 mass% or more of oil and/or fat with respect to the solids of the powdery chocolate composition; (D) the powdery chocolate composition contains 0.5 mass% or less of a milk-derived raw material with respect to the solids of the powdery chocolate composition; and (E) the powdery chocolate composition, when dispersed in water, has an average emulsion particle size of 1.5 µm or more and 10 µm or less, powdery chocolate compositions having an average emulsion particle size of 1.5 µm or more and 10 µm or less were prepared, the samples were excellent in seed function and snap when added to chocolate, and the samples were excellent in dispersibility and the flavor as a chocolate beverage. In Comparative Examples 2 and 3 not satisfying the requirement (A) and Comparative Example 1 not satisfying the requirement (C), the average emulsion particle size exceeded 10 µm, and it was found that good quality was not obtained both for a seed and a beverage.

**Table 1**

| | | (Oil content) | (pH) | Example 1 | Example 2 | Example 3 | Example 4 | Example 5 | Comparative Example 1 | Comparative Example 2 | Comparative Example 3 |
|---|---|---|---|---|---|---|---|---|---|---|---|
| Formulation (mass%) | Cocoa mass A | (55%) | 5.3 | 32 | 38 | 42 | 44 | 47 | | 45 | 60 |
| | Cocoa powder A | (11%) | 6.9 | 18 | 12 | 8 | 6 | 4 | 50 | | |
| | Cocoa butter | 100 | | | | | | | | 5 | |
| | Sugar | | | 50 | 50 | 50 | 50 | 50 | 50 | 50 | 40 |
| | Total solids | | | 100 | 100 | 100 | 100 | 101 | 100 | 100 | 100 |
| | Amount of water added | | | 130 | 120 | 110 | 110 | 100 | 180 | 90 | 110 |
| Relative value (mass%) | Fat/non-fat cocoa content | (Requirement A) | | 64.4 | 80.0 | 92.2 | 98.9 | 106.4 | 12.4 | 146.9 | 122.2 |
| | Cocoa raw material/solids | (Requirement B) | | 50.0 | 50.0 | 50.0 | 50.0 | 51.0 | 50.0 | 50.0 | 60.0 |
| | Fat/solids | (Requirement C) | | 19.6 | 22.2 | 24.0 | 24.9 | 26.3 | 5.5 | 29.8 | 33.0 |
| | SUS/solids | | | 15.9 | 18.0 | 19.4 | 20.1 | 21.3 | 4.5 | 24.1 | 26.7 |
| Physical properties | Water content of powder | | | 3.1 | 3.2 | 3.0 | 3.1 | 3.0 | 3.8 | 2.8 | 2.6 |
| | Average powder particle size | | | 25.6 | 24.5 | 25.2 | 26.1 | 35.4 | 33.1 | 40.2 | 44.3 |
| | Average emulsion particle size | | | 1.8 | 2.5 | 3.2 | 5.0 | 7.5 | 14.6 | 22.1 | 44.5 |
| Seed suitability | Seed function | | | 3 | 4 | 4 | 4 | 3 | 2 | 2 | 1 |
| | Snap | | | 3 | 3 | 3 | 3 | 3 | 2 | 2 | 1 |
| Chocolate beverage suitability | Dispersibility (seconds) | | | 14 | 13 | 12 | 14 | 18 | 22 | 34 | 45 |
| | Sweet chocolate flavor | | | 3 | 3 | 4 | 4 | 4 | 1 | 4 | 4 |
| | Off-flavor other than sweet chocolate flavor | | | 3 | 3 | 3 | 3 | 3 | 3 | 3 | 3 |
| Overall evaluation | | | | Acceptable | Acceptable | Acceptable | Acceptable | Acceptable | Unacceptable | Unacceptable | Unacceptable |

### Production and Evaluation of Powdery Chocolate Composition 2 - Influence of pH of Cocoa Raw Material

Powdery chocolate compositions were prepared according to the formulations shown in Table 2 by the same operation as in Example 1.

It was found that in Examples 6 to 9 satisfying all the conditions (A) to (E) described above, regardless of the difference in pH value of the used cocoa-derived raw materials, powdery chocolate compositions having an average emulsion particle size of 1.5 µm or more and 10 µm or less were prepared, the samples were excellent in seed function and snap when added to chocolate, and the samples were excellent in dispersibility and the flavor as a chocolate beverage. However, in Example 7 in which cocoa mass and cocoa that had not been subjected to alkali treatment were used, the average emulsion particle size was somewhat large, and the samples were slightly poor in seed suitability and chocolate beverage suitability.

**Table 2**

| | | (Oil content) | (pH) | Example 3 | Example 6 | Example 7 | Example 8 | Example 9 |
|---|---|---|---|---|---|---|---|---|
| Formulation (mass%) | Cocoa mass A | (55%) | 5.3 | 42 | | 32 | 42 | 42 |
| | Cocoa mass B | (55%) | 7.4 | | 42 | | | |
| | Cocoa powder A | (11%) | 6.9 | 8 | 8 | | | |
| | Cocoa powder B | (11%) | 5.4 | | | 18 | | |
| | Cocoa powder C | (11%) | 7.6 | | | | 8 | |
| | Cocoa powder D | (11%) | 8.2 | | | | | 8 |
| | Sugar | | | 50 | 50 | 50 | 50 | 50 |
| | Total solids | | | 100 | 100 | 100 | 100 | 100 |
| | Amount of water added | | | 110 | 110 | 130 | 110 | 110 |
| Relative value (mass%) | Fat/non-fat cocoa content | (Requirement A) | | 92.2 | 92.2 | 64.4 | 92.2 | 92.2 |
| | Cocoa raw material/solids | (Requirement B) | | 50.0 | 50.0 | 50.0 | 50.0 | 50.0 |
| | Fat/solids | (Requirement C) | | 24.0 | 24.0 | 19.6 | 24.0 | 24.0 |
| | SUS/solids | | | 19.4 | 19.4 | 15.9 | 19.4 | 19.4 |
| Physical properties | Water content of powder | | | 3.0 | 2.9 | 3.3 | 3.1 | 2.9 |
| | Average powder particle size | | | 25.2 | 28.4 | 27.4 | 26.5 | 25.4 |
| | Average emulsion particle size | | | 3.2 | 2.6 | 8.9 | 2.9 | 2.5 |
| Seed suitability | Seed function | | | 4 | 4 | 3 | 4 | 4 |
| | Snap | | | 3 | 3 | 3 | 3 | 3 |
| Chocolate beverage suitability | Dispersibility (seconds) | | | 12 | 10 | 19 | 11 | 10 |
| | Sweet chocolate flavor | | | 4 | 4 | 4 | 4 | 4 |
| | Off-flavor other than sweet chocolate flavor | | | 3 | 3 | 3 | 3 | 3 |
| Overall evaluation | | | | Acceptable | Acceptable | Acceptable | Acceptable | Acceptable |

### Production and Evaluation of Powdery Chocolate Composition 3 - Examination of Blend Ratio 2

Powdery chocolate compositions were prepared according to the formulations shown in Table 3 by the same operation as in Example 1.

It was found that in Examples 10 to 13 satisfying all the conditions (A) to (E) described above, regardless of the difference in formulation, powdery chocolate compositions having an average emulsion particle size of 1.5 µm or more and 10 µm or less were prepared, the samples were excellent in seed function and snap when added to chocolate, and the samples were excellent in dispersibility and the flavor as a chocolate beverage. Meanwhile, Comparative Example 4 in which the value of (C) was low was poor in chocolate flavor as a chocolate beverage.

In addition, as for the chocolate compositions that satisfied all the conditions (A) to (E) but were prepared using a cocoa butter alternative or rapeseed oil (Examples 14 and 15), that is, oils and/or fats other than the cocoa-derived raw material, the chocolate compositions had a slightly inferior cacao flavor of the sweet chocolate.

**Table 3**

| | | (Oil content) | (pH) | Example | 3 Example 10 | Example 11 | Example 12 | Example 13 | Example 14 | Example 15 | Comparative Example 4 |
|---|---|---|---|---|---|---|---|---|---|---|---|
| Formulation (mass%) | Cocoa mass A | (55%) | 5.3 | 42 | 35 | 50 | 59 | 70 | 18 | 18 | 20 |
| | Cocoa powder A | (11%) | 6.9 | 8 | 5 | 10 | 11 | 10 | 25 | 25 | 10 |
| | Cocoa butter alternative | (100%) | | | | | | | 7 | | |
| | Rapeseed oil | (100%) | | | | | | | | 7 | |
| | Sugar | | | 50 | 60 | 40 | 30 | 20 | 50 | 50 | 70 |
| | Total solids | | | 100 | 100 | 100 | 100 | 100 | 100 | 100 | 100 |
| | Amount of water added | | | 110 | 90 | 130 | 150 | 170 | 130 | 130 | 80 |
| Relative value (mass%) | Fat/non-fat cocoa content | (Requirement A) | | 92.2 | 98.0 | 91.1 | 92.2 | 98.0 | 64.7 | 64.7 | 67.6 |
| | Cocoa raw material/solids | (Requirement B) | | 50.0 | 40.0 | 60.0 | 70.0 | 80.0 | 43.0 | 43.0 | 30.0 |
| | Fat/solids | (Requirement C) | | 24.0 | 19.8 | 28.6 | 33.6 | 39.6 | 19.7 | 19.7 | 12.1 |
| | SUS/solids | | | 19.4 | 19.8 | 23.2 | 27.2 | 32.1 | 15.9 | 10.2 | 9.8 |
| Physical properties | Water content of powder | | | 3.0 | 2.8 | 2.7 | 2.6 | 2.3 | 3.3 | 3.3 | 3.3 |
| | Average powder particle size | | | 25.2 | 30.2 | 34.1 | 41.3 | 45.1 | 28.4 | 31.2 | 33.7 |
| | Average emulsion particle size | | | 3.2 | 4.8 | 3.6 | 4.1 | 9.1 | 2.5 | 2.4 | 4.5 |
| Seed suitability | Seed function | | | 4 | 3 | 4 | 4 | 3 | 4 | 3 | 3 |
| | Snap | | | 3 | 3 | 3 | 3 | 3 | 3 | 3 | 3 |
| Chocolate beverage suitability | Dispersibility (seconds) | | | 12 | 19 | 12 | 16 | 18 | 13 | 13 | 9 |
| | Sweet chocolate flavor | | | 4 | 3 | 4 | 4 | 4 | 3 | 3 | 2 |
| | Off-flavor other than sweet chocolate flavor | | | 3 | 3 | 3 | 3 | 3 | 3 | 3 | 3 |
| Overall evaluation | | | | Acceptable | Acceptable | Acceptable | Acceptable | Acceptable | Acceptable | Acceptable | Unacceptable |

### Production and Evaluation of Powdery Chocolate Composition 4 - Examination of Milk Raw Material

Powdery chocolate compositions were prepared according to the formulations shown in Table 4 by the same operation as in Example 1. In Comparative Examples 5 and 6, a part of sugar was changed to a milk-derived raw material such as lactose or whole milk powder, in Comparative Example 7, a part of sugar was changed to casein as a milk raw material and a hydrophilic emulsifier, and in Examples 16 to 18, all of sugar was changed to glucose, dextrin, or indigestible dextrin. Further, in Examples 19 and 20, a small amount of lecithin was added.

The results are shown in the lower part of Table 4. It was found that in Examples 16 to 18 satisfying all the conditions (A) to (E) described above, even when sugar was changed to other saccharides, powdery chocolate compositions having an average emulsion particle size of 1.5 µm or more and 10 µm or less were prepared, the samples were excellent in seed function and snap when added to chocolate, and the samples were excellent in dispersibility and the flavor as a chocolate beverage. Meanwhile, in Comparative Examples 5 and 6 in which a milk-derived component was added, the average emulsion particle size exceeded 10 µm, and in Comparative Example 7 in which the sample contained an emulsifier, the average emulsion particle size was too small and less than 1.5 µm. Therefore, all of the comparative samples were out of the conditions. None of Comparative Examples 5 to 7 had a seed function or snap, and the beverages had a strong off-flavor derived from a component other than sweet chocolate.

Further, in Example 19, the addition of lecithin in a very small amount of 0.005 mass% had little impact, and in Example 20, the addition of lecithin in an amount of 0.1 mass% somewhat increased the average emulsion particle size and slightly reduced the dispersibility.

**Table 4**

| | | (Oil content) | (pH) | Example 2 | Comparative Example 5 | Comparative Example 6 | Comparative Example 7 | Example 16 | Example 17 | Example 18 | Example 19 | Example 20 |
|---|---|---|---|---|---|---|---|---|---|---|---|---|
| Formulation (mass%) | Cocoa mass A | (55%) | 5.3 | 38 | 37 | 37 | 32 | 42 | 42 | 42 | 42 | 42 |
| | Cocoa powder A | (11%) | 6.9 | 12 | 13 | 13 | 18 | 8 | 8 | 8 | 8 | 8 |
| | Sugar | | | 50 | 40 | 45 | 48 | | | | 50 | 50 |
| | Glucose | | | | | | | 50 | | | | |
| | Dextrin | | | | | | | | 50 | | | |
| | Indigestible dextrin | | | | | | | | | 50 | | |
| | Lactose | | | | 10 | | | | | | | |
| | Whole milk powder | | | | | 5 | | | | | | |
| | Sodium caseinate | | | | | | 1 | | | | | |
| | Hydrophilic emulsifier | | | | | | 1 | | | | | |
| | Lecithin | | | | | | | | | | 0.005 | 0.1 |
| | Total solids | (Rounded down to the nearest integer) | | 100 | 100 | 100 | 100 | 100 | 100 | 100 | 100 | 100 |
| | Amount of water added | | | 120 | 120 | 120 | 130 | 110 | 110 | 110 | 110 | 110 |
| Relative value (mass%) | Fat/non-fat cocoa content | (Requirement A) | | 80.0 | 77.2 | 77.2 | 64.4 | 92.2 | 92.2 | 92.2 | 92.2 | 92.2 |
| | Cocoa raw material/solids | (Requirement B) | | 50.0 | 50.0 | 50.0 | 50.0 | 50.0 | 50.0 | 50.0 | 50.0 | 50.0 |
| | Fat/solids | (Requirement C) | | 22.2 | 21.8 | 21.8 | 19.6 | 24.0 | 24.0 | 24.0 | 24.0 | 24.0 |
| | SUS/solids | | | 18.0 | 17.6 | 17.6 | 15.9 | 19.4 | 19.4 | 19.4 | 19.4 | 19.4 |
| Physical properties | Water content of powder | | | 3.2 | 3.1 | 3.1 | 3.3 | 3.1 | 2.9 | 2.9 | 3.0 | 2.9 |
| | Average powder particle size | | | 24.5 | 46.3 | 41.3 | 28.4 | 27.8 | 33.4 | 35.9 | 33.4 | 33.4 |
| | Average emulsion particle size | | | 2.5 | 13.2 | 11.2 | 0.7 | 3.4 | 2.9 | 3.6 | 4.1 | 8.3 |
| Seed suitability | Seed function | | | 4 | 2 | 2 | 1 | 4 | 4 | 3 | 3 | 3 |
| | Snap | | | 3 | 1 | 1 | 1 | 3 | 3 | 3 | 3 | 3 |
| Chocolate beverage suitability | Dispersibility (seconds) | | | 13 | 18 | 21 | 18 | 14 | 12 | 16 | 14 | 19 |
| | Sweet chocolate flavor | | | 3 | 3 | 2 | 2 | 4 | 4 | 4 | 4 | 4 |
| | Off-flavor other than sweet chocolate flavor | | | 3 | 1 | 1 | 1 | 3 | 2 | 2 | 3 | 3 |
| Overall evaluation | | | | Acceptable | Unacceptable | Unacceptable | Unacceptable | Acceptable | Acceptable | Acceptable | Acceptable | Acceptable |

### Industrial Applicability

The powdery chocolate composition of the present invention can be used as a chocolate seed having high performance, and also as a powdery chocolate beverage having good dispersibility. Compared with those currently distributed, the seed agent does not require strict temperature control, and the latter provides unprecedented convenience and flavor, and therefore, both of them are deeply involved in the food industry.

## Claims

1. A method for producing a powdery chocolate composition, the method comprising drying an oil-in-water emulsion having an average emulsion particle size of 1.5 µm or more and 10 µm or less, the oil-in-water emulsion being produced by dispersing, in water, a raw material satisfying all of conditions (A) to (D) presented below:
(A) the raw material contains 110 mass% or less of oil and/or fat with respect to non-fat cocoa solids;
(B) the raw material contains 30 mass% or more of cocoa-derived raw material solids with respect to solids of the powdery chocolate composition;
(C) the raw material contains 15 mass% or more of oil and/or fat with respect to the solids of the powdery chocolate composition; and
(D) the raw material is free of a milk-derived raw material.

2. The method for producing a powdery chocolate composition according to claim 1, wherein from 30 to 75 mass% of cocoa mass, from 3 to 30 mass% of cocoa, and from 15 to 60 mass% of a saccharide are used as the raw material.

3. The method for producing a powdery chocolate composition according to claim 2, wherein the cocoa mass and/or the cocoa is subjected to alkali treatment.

4. The method for producing a powdery chocolate composition according to claim 1, wherein a method for the drying is spray drying.

5. The method for producing a powdery chocolate composition according to claim 4, wherein from 30 to 75 mass% of cocoa mass, from 3 to 30 mass% of cocoa, and from 15 to 60 mass% of a saccharide are used as the raw material.

6. The method for producing a powdery chocolate composition according to claim 5, wherein the cocoa mass and/or the cocoa is subjected to alkali treatment.

7. A powdery chocolate composition satisfying all of conditions (A) to (E) presented below:
(A) the powdery chocolate composition contains 110 mass% or less of oil and/or fat with respect to non-fat cocoa solids;
(B) the powdery chocolate composition contains 30 mass% or more of cocoa-derived raw material solids with respect to solids of the powdery chocolate composition;
(C) the powdery chocolate composition contains 15 mass% or more of oil and/or fat with respect to the solids of the powdery chocolate composition;
(D) the powdery chocolate composition contains 0.5 mass% or less of a milk-derived raw material with respect to the solids of the powdery chocolate composition; and
(E) the powdery chocolate composition, when dispersed in water, has an average emulsion particle size of 1.5 µm or more and 10 µm or less.

8. The powdery chocolate composition according to claim 7, comprising 8 mass% or more and 35 mass% or less of an SUS triglyceride with respect to the solids of the powdery chocolate composition, where
S is a saturated fatty acid having from 16 to 18 carbon atoms, U is a monounsaturated fatty acid having from 16 to 18 carbon atoms, and SUS is a triglyceride in which S is bonded to 1- and 3-positions of the triglyceride and U is bonded to 2-position of the triglyceride.

9. A chocolate seed agent comprising the powdery chocolate composition described in claim 7.

10. A chocolate powder beverage comprising the powdery chocolate composition described in claim 7.

11. A chocolate beverage comprising the powdery chocolate composition described in claim 7 dispersed in water or warm water.

12. A chocolate seed agent comprising the powdery chocolate composition described in claim 8.

13. A chocolate powder beverage comprising the powdery chocolate composition described in claim 8.

14. A chocolate beverage comprising the powdery chocolate composition described in claim 8 dispersed in water or warm water.
